# EUROPÄISCHE PATENTSCHRIFT

(11) **EP 1 125 066 B1**
(45) Veröffentlichungstag und Bekanntmachung des Hinweises auf die Patenterteilung: **09.07.2003**
(21) Anmeldenummer: 99952484.6
(22) Anmeldetag: 01.10.1999
(51) Int. Cl.: F16D 25/08, F16D 23/14

(54) **DICHTELEMENT FÜR EIN AUSRÜCKLAGER**
SEALING ELEMENT FOR A RELEASE BEARING
ELEMENT D'ETANCHEITE POUR BUTEE DE DEBRAYAGE

(30) Priorität: 29.10.1998 DE 19849892
(43) Veröffentlichungstag der Anmeldung: 22.08.2001
(73) Patentinhaber: INA-Schaeffler KG, 91074 Herzogenaurach (DE)
(72) Erfinder: OSTERLÄNGER, Jürgen, D-91448 Emskirchen (DE); KLÖPFER, Bernhard, D-91438 Bad Windsheim (DE); BÖSSNER, Ralf, D-91217 Hersbruck (DE); KLEIBER, Thomas, D-91093 Hessdorf (DE)
(86) Internationale Anmeldenummer: EP9907294
(87) Internationale Veröffentlichungsnummer: WO00026556

(56) Entgegenhaltungen:
- EP-A- 0 770 789
- DE-A- 2 217 943
- DE-A- 19 746 538
- DE-U- 9 011 432
- GB-A- 2 219 837
- GB-A- 2 259 555

## Beschreibung

### Anwendungsgebiet der Erfindung

Die Erfindung betrifft ein Ausrücklager für eine Ausrückvorrichtung, die in Kraftfahrzeugen zwischen einer Brennkraftmaschine und einem insbesondere mechanisch schaltbaren Zahnräderwechselgetriebe angeordnet ist, zur Betätigung einer Reibungskupplung. Als Ausrücklager ist ein als Schrägkugellager ausgebildetes Wälzlager vorgesehen, mit einem umlaufenden, rotierenden Lagerring sowie einem drehstarr angeordneten Lagerring. Zur Erzielung eines spielfreien Einbaus ist das Ausrücklager von einer Vorlastfeder beaufschlagt, die zwischen einem Gehäuse der Ausrückvorrichtung und dem drehstarr angeordneten Lagerring eingesetzt ist. Zur Abdeckung eines ringförmigen Zwischenraums, der sich zwischen den beabstandeten Lagerringen des Ausrücklagers einstellt, ist ein Dichtelement vorgesehen, welches an dem drehstarren Lagerring befestigt ist und dessen vorstehender Abschnitt den Zwischenraum sowie teilweise den umlaufenden Lagerring unter Einhaltung eines Ringspaltes übergreift.

### Hintergrund der Erfindung

Ein Ausrücklager der vorgenannten Gattung ist aus der Druckschrift DE 34 14 106 C bekannt. Zur Abdichtung weist dieses Ausrücklager ein Ringelement auf, das drehfest an einem Lagerring befestigt ist und dessen freies Ende bis nahe an eine Innenseite des zugehörigen weiteren Lagerrings geführt ist. Auf der vom Ringelement gegenüberliegenden Seite der Wälzkörper des Ausrücklagers ist zur Abdichtung des Zwischenraums ein Abstützflansch des Lagerrings bis nahe an den gegenüberliegenden Lagerring geführt. Die bekannte Lösung erfordert ein gehärtetes Dichtelement sowie eine genaue Montage zur Vermeidung einer nachteiligen Berührung des Dichtelementes an dem zugehörigen Lagerring des Ausrücklagers. Zur Vermeidung einer Anlaufgefahr muß das als Abdeckkappe bezeichnete Dichtelement exakt gefertigt und montiert werden. Die Fertigungsgenauigkeit erstreckt sich dabei auch auf die Anlagefläche des Dichtelementes am Lagerring. Der hohe Grad an Genauigkeit bei der Herstellung und der Montage führt zu einem Kostennachteil des bekannten Dichtelementes.

Alternativ ist aus dem bekannten Stand der Technik eine elastische Dichtung bekannt, die drehfixiert an einem Lagerring angeordnet ist und gegenseitig schleifend an dem weiteren Lagerring anliegt. Diese bekannten Maßnahmen zur Abdichtung des Zwischenraums eines Ausrücklagers sind nicht ausreichend. Der Dichtspalt zwischen dem Dichtelement und dem Lagerring ist beispielsweise so bemessen, daß dieser ein Eindringen von Abtriebteilen der Mitnehmerscheibe einer Reibungskupplung nicht unterbindet. Dagegen wirkt sich eine elastische Dichtung, die an einem Lagerring schleifend anliegt, nachteilig auf das Reibmoment des Wälzlagers aus und führt zu einer nachteiligen Erwärmung, die zum Schmierstoffverlust führen kann und damit die Lebensdauer des Ausrücklagers reduziert.

### Aufgabe der Erfindung

Zur Vermeidung der zuvor genannten Nachteile ist es Aufgabe der Erfindung, ein kostengünstig herstellbares, sicher montierbares Dichtelement zu schaffen, an das geringe Anforderungen hinsichtlich der Genauigkeit gestellt sind, ohne dabei die Wirksamkeit zu beeinträchtigen.

### Zusammenfassung der Erfindung

Erfindungsgemäß wird die Aufgabe durch die kennzeichnenden Merkmale des Anspruchs 1 gelöst. Danach ist ein Dichtelement vorgesehen, dessen weitestgehend zylindrisch gestalteter Abschnitt, den sich bildenden Zwischenraum zwischen den beabstandeten Lagerringen überdeckt, und an dem zur Vorlastfeder gerichteten Ende mit einem radial nach innen ausgerichteten Schenkel versehen ist. Das Dichtelement ist dabei so angeordnet, daß der radial ausgerichtete Schenkel am drehstarr angeordneten Lagerring auf der von den Wälzkörpem abgewandten Seite abgestützt ist. In der Einbaulage ist der Schenkel des Dichtelementes kraftbeaufschlagt von der Vorlastfeder der Ausrückvorrichtung, so daß der Schenkel kraftschlüssig am drehstarr angeordneten Lagerring anliegt. Ein derartig gestaltetes Dichtelement ermöglicht eine einfache Handhabung und Montage. Durch die federkraftbeaufschlagte Anlage vom Schenkel am Lagerring ergibt sich weiterhin eine sichere, dauerhafte Befestigung des Dichtelementes. Außerdem verlangt das Dichtelement bei einer wirksamen Abdichtgüte keine hohen Anforderungen an die Genauigkeit, wodurch sich insgesamt ein deutlicher Kostenvorteil gegenüber bisherigen Lösungen einstellt.

Weitere vorteilhafte Ausgestaltungen der Erfindung sind Gegenstand der Ansprüche 2 bis 15.

In vorteilhafter Weise bietet es sich an, daß der radial ausgerichtete Schenkel des Dichtelementes an einem ebenfalls radial ausgerichteten Flansch des Lagerrings abgestützt ist. Damit vergrößert sich die Abstützfläche, wodurch die Gefahr einer Verkantung des Dichtelementes vermieden wird. Die sich damit einstellende vergrößerte Abstützfläche des Schenkels wirkt sich gleichzeitig positiv auf die Einleitung der Kraft von der Vorlastfeder in den drehstarren Lagerring aus.

Eine weitere Ausgestaltung der Erfindung sieht einen Schenkel des Dichtelementes vor, der einen axial vorstehenden Ansatz aufweist. Der Ansatz ist dabei so gestaltet, daß dieser eine Endwindung der Vorlastfeder umschließt und damit die Vorlastfeder außenzentriert ist. Die zentrierte Vorlastfeder bewirkt gleichzeitig einen lageorientierten Einbau des Dichtelementes.

Die weitere erfindungsgemäße Ausgestaltung der Erfindung sieht einen Einbau des Dichtelementes vor, bei dem ein Endabschnitt des Lagerrings innenseitig in den Ansatz des Schenkels von dem Dichtelement eingreift. Dazu ist der drehstarr angeordnete Lagerring mit einem endseitig axial verlaufenden Bord versehen, der sich an den radial ausgerichteten Flansch des Lagerrings anschließt. Der Bord des Lagerrings kann dabei gleichzeitig zur Zentrierung bzw. Führung des Dichtelementes dienen, in dem der Bord an der Innen- oder Außenwandung des Ansatzes vom Dichtelement geführt ist.

Das erfindungsgemäße Dichtelement ist weiterhin kombinierbar mit einem drehstarren Lagerring, der am freien Ende einen axial vorstehenden, hülsenartig verlaufenden Endabschnitt aufweist. Dabei stützt sich der Schenkel des Dichtelementes an der Stirnseite von dem axial verlaufenden Endabschnitt des Lagerrings ab. Zur exakten Lagebestimmung zwischen derartig gestalteten Bauteilen bietet es sich an, den Schenkel des Dichtelementes zur Bildung eines Bordes am freien Ende rechtwinkelig abzukanten. In der Einbaulage umgreift der Bord dabei den Endabschnitt von dem horizontal verlaufenden Flansch des Lagerrings. Eine derartige Ausbildung des Dichtelementes bewirkt eine ausschließlich vom drehstarr angeordneten Lagerring bestimmte Einbaulage des Dichtelementes. Dabei kann der Schenkel des Dichtelementes ebenfalls mit einem axial vorstehenden Ansatz versehen sein, an dem die Vorlastfeder außenzentiert ist. Zur Schaffung einer kraftschlüssigen Verbindung zwischen dem Bord des Schenkels und dem axial ausgerichteten Endabschnitt des Lagerrings schließt die Erfindung einen Preßsitz zwischen diesen Bauteilen ein. Alternativ bietet es sich an, den Bord des Schenkels mit einer profilierten Mantelfläche zu versehen, die formschlüssig mit einer entsprechend gestalteten Fläche am Endabschnitt des Lagerrings korrespondiert.

Eine weitere vorteilhafte Ausführung des Dichtelementes sieht vor, daß dessen hülsenartig gestalteter axialer Abschnitt den umlaufenden, rotierenden Lagerring soweit übergreift, daß alle Bauteile des Ausrücklagers zu einer unverlierbaren Einheit zusammengefaßt sind. Dazu ist der axiale Abschnitt des Dichtelementes unter Einhaltung eines Ringspaltes, bis über einen der Wälzkörperform der kugeligen Wälzkörper entsprechenden konvexen Außenkontur des umlaufenden Lagerrings geführt. Dabei stellt sich eine radiale Überdeckung bzw. Hinterschneidung zwischen dem freien Ende des Dichtelementes und dem Lagerring ein, wodurch beide Lagerringe sowie die darin eingesetzten Wälzkörper zu einer unverlierbaren Einheit zusammengefügt sind.

Vorzugsweise ist das freie Ende von dem axialen Abschnitt des Dichtelementes im Vergleich zu übrigen Bereichen des Dichtelementes mit einer reduzierten Wandstärke versehen. Diese geschwächte Wandstärke ermöglicht im eingebauten Zustand des Dichtelementes ein vereinfachtes Abkanten zur Erzielung einer Hinterschneidung des Dichtelementes mit dem rotierenden Lagerring.

Alternativ schließt die Erfindung ein, daß der wandstärkenreduzierte Endabschnitt des Dichtelementes vor dem Einbau so geformt wird, daß dieser in der Einbaulage selbsttätig seine Ausgangsform einnimmt, d. h. keine Nacharbeit erfordert. Dieses Ziel kann beispielsweise durch ein Bördeln erreicht werden, mit dem der wandstärkenreduzierte Endabschnitt zunächst radial nach innen gebogen bzw. abgekantet wird, an den sich endseitig eine umgekehrte Abkantung anschließt. Diese Formgebung ermöglicht beim Einbau aufgrund der Eigenelastizität des wandstärkenreduzierten Endabschnitts ein radiales Aufweiten bei einem axialen Zuführen des Dichtelementes auf den laufenden Lagerring. In der Einbaulage kommt es anschließend zu einer radial nach innen gerichteten Verlagerung des Endabschnitts, unter Einhaltung eines Ringspaltes zum Lagerring.

Als geeigneter Werkstoff, aus dem das erfindungsgemäße Dichtelement hergestellt werden kann, bietet sich vorteilhaft ein metallisches Bandmaterial an. Zur Herstellung eignet sich dabei ein auch für Großserien einen Kostenvorteil bietendes Tiefziehverfahren. Alternativ schließt die Erfindung ebenfalls ein aus Kunststoff hergestelltes Dichtelement ein.

### Kurze Beschreibung der Zeichnungen

Ausführungsbeispiele der Erfindung sind in den Zeichnungen dargestellt, die nachfolgend näher beschrieben sind. Es zeigen:
- Figur 1: in einem Halbschnitt eine Ausrückvorrichtung für eine Reibungskupplung, in die ein Ausrücklager mit einem erfindungsgemäßen Dichtelement angeordnet ist;
- Figur 2: das in Figur 1 abgebildete Ausrücklager in einem vergrößerten Maßstab;
- Figur 3: ein zu Figur 2 alternativ gestaltetes Ausrücklager mit einem zugehörigen Dichtelement;
- Figur 4: die Ausbildung eines weiteren erfindungsgemäßen Dichtelementes.

### Ausführliche Beschreibung der Zeichnungen

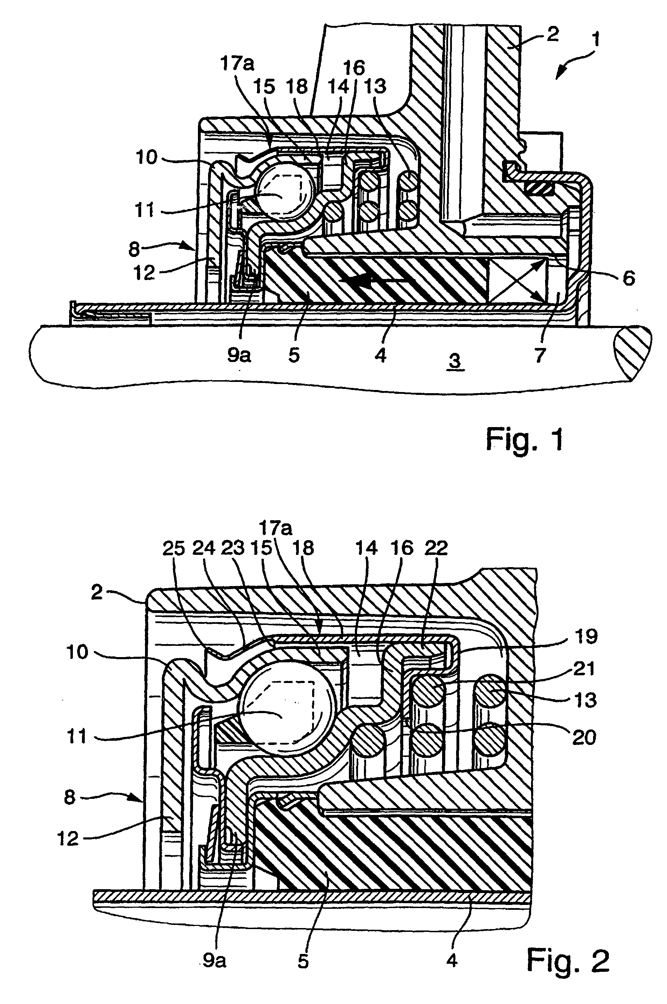

In Figur 1 ist mit der Bezugsziffer 1 eine Ausrückvorrichtung im Halbschnitt abgebildet, die im eingebauten Zustand zwischen einer Brennkraftmaschine und einem insbesondere mechanisch schaltbaren Zahnräderwechselgetriebe angeordnet ist. Die Ausrückvorrichtung 1 ist hydraulisch betätigbar und umfaßt ein Gehäuse 2, welches in der Einbaulage am Getriebegehäuse befestigt ist. Die Ausbildung des Gehäuses 2 sieht vor, daß dieses eine die Brennkraftmaschine mit dem Schaltgetriebe verbindende Antriebswelle 3 konzentrisch umschließt. Das Gehäuse 2 umfaßt eine Führungshülse 4, die radial beabstandet zur Antriebswelle 3 angeordnet ist und die sich axial über die Baulänge der Ausrückvorrichtung 1 erstreckt. In einem kreisringförmigen, von der Führungshülse 4 und einer Bohrungswandung 6 des Gehäuses 2 begrenzten Druckraum 7 ist ein Ringkolben 5 verschiebbar geführt. Bei einer Beaufschlagung des Druckraums 7 mit einem Druckmittel verlagert sich der Ringkolben 5 in Pfeilrichtung, d. h. in Richtung einer in Figur 1 nicht abgebildeten Reibungskupplung. An dem vom Druckraum 7 abgewandten Ende ist der Ringkolben 5 mit einem Ausrücklager 8 versehen, ausgeführt als ein Wälzlager in einer Schrägschulterbauweise. Das Ausrücklager 8 umfaßt einen drehstarr am Ringkolben 5 befestigten Innenring sowie einen umlaufenden, rotierenden Außenring 10. Zwischen dem Innenring 9a und dem Außenring 10 sind Wälzkörper 11, ausgebildet als Kugeln, geführt.

Das Ausrücklager 8 ist über einen radial ausgerichteten Flansch 12 des Außenrings 10 an Ausrückhebeln der Reibungskupplung abgestützt. Zur Erzielung einer kraftschlüssigen Anlage des Ausrücklagers 8 an der Reibungskupplung dient eine Vorlastfeder 13, die zwischen dem Gehäuse 2 und dem Innenring 9a eingesetzt ist. Das Ausrücklager 8 bildet auf der vom Flansch 12 abgewandten Seite einen ringförmigen, nach außen offenen Zwischenraum 14. Der Öffnungsbereich des Zwischenraums 14 ist begrenzt durch eine Stirnseite 15 des zylindrischen Abschnitts vom Außenring 10 sowie einem radial ausgerichteten Flansch 16 des Innenrings 9a. Als Maßnahme, mit der ein Eindringen von Verunreinigungen in den Zwischenraum verhindert werden kann, ist ein Dichtelement 17a vorgesehen, das am Flansch 16 des Innenrings 9a befestigt ist und mit einem axial ausgerichteten Abschnitt 18 den Zwischenraum 14 sowie Bereiche des Außenrings 10 übergreift.

Die Gestaltung und Anordnung des Dichtungselementes 17a verdeutlicht die Figur 2, in der das Ausrücklager 8 in einem vergrößerten Maßstab abgebildet ist. Der Aufbau des Dichtelementes umfaßt danach einen zylindrischen Abschnitt 18, an den sich endseitig, d. h. an dem zur Vorlastfeder 13 gerichteten Ende ein weitestgehend radial ausgerichteter Bereich anschließt. Das Dichtelement 17a bildet stimseitig einen umlaufenden Ansatz 19 mit einem weitestgehend um 90° versetzt angeordneten U-förmigen Profil. An den Ansatz 19 schließt sich ein radial nach innen gerichteter, zum Ansatz 19 axial versetzter Schenkel 20 an, mit dem das Dichtelement 17a am Flansch 16 des Innenrings 9a abgestützt ist. Zur Erzielung einer kraftschlüssigen Anlage des Dichtelementes 17a am Innenring 9a dient die Vorlastfeder 13, deren Endwindung 21 unmittelbar am Schenkel 20 des Dichtelementes 17a anliegt. Die Formgebung des Ansatzes 19 vom Dichtelement 17a ermöglicht weiterhin einen außenzentrierten Einbau der Vorlastfeder 13, in dem die Endwindung 21 vom Ansatz 19 außen umschlossen ist. Zur Erzielung einer durch den Innenring 9a bestimmten Einbaulage des Dichtelementes 17a dient ein Bord 22, der sich am freien Ende vom Flansch 16 des Innenrings 9a anschließt. Dieser axial in Richtung der Vorlastfeder 13 ausgerichtete Bord 22 greift dabei in das U-förmige Profil des Ansatzes 19 ein.

Die Einbaulage des Dichtelementes 17a wird dabei bestimmt durch dessen Anlage am Bord 22 des Innenrings 9a. Die Ausbildung des Dichtelementes 17a sieht vor, daß dessen hülsenförmig gestalteter Abschnitt 18 sowohl den Zwischenraum 14 übergreift als auch einen äußeren Bereich des Außenrings 10. Der zylindrische Abschnitt 18 des Dichtelementes 17a, der unter Einhaltung eines Ringspaltes 23 zum axial ausgerichteten Endbereich des Außenrings 10 verläuft, bildet am freien Ende eine wandstärkenreduzierte Zone 24. Diese radial nach innen abgekantete und der konvexen Formgebung des Außenrings 10 folgende Zone 24 bildet eine Hinterschneidung und stellt damit eine unverlierbare Einheit aller Bauteile des Ausrücklagers 8 sicher. Am freien Ende ist die Zone 24 mit einem nach außen gerichteten Abschnitt 25 versehen. Die Formgebung dieser wandstärkenreduzierten Zone 24 gestattet ein vorgefertigtes Dichtelement 17a. Die reduzierte Wandstärke verbessert die Elastizität, so daß bei einer Montage, d. h. einer axialen Zuführung des Dichtelementes 17a die Zone 24 radial ausweicht und in der Endlage selbsttätig die Ausgangsposition einnimmt und damit die Hinterschneidung sicherstellt.

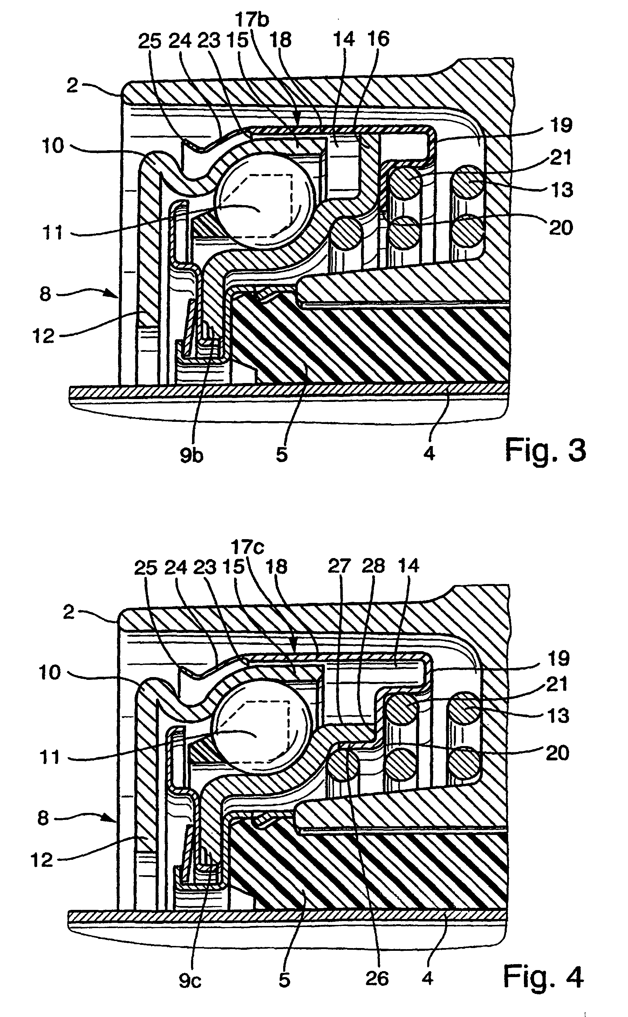

In Figur 3 ist das Ausrücklager 8 mit einem aus Kunststoff hergestellten Dichtelement 17b versehen, dessen Formgebung dem Dichtelement 17a gemäß Figur 2 entspricht. Der Innenring 9b des Ausrücklagers 8 ist versehen mit einem ausschließlich radial ausgerichteten Flansch 16, der bis zur Innenwandung des Abschnitts 18 vom Dichtelement 17b geführt ist. Die axiale Abstützung des Dichtungselements 17b erfolgt vergleichbar der in Figur 2 dargestellten Ausführung über den Schenkel 20 am Flansch 16. Die Gestaltung aller übrigen Bauteile des Ausrücklagers 8 sowie des Dichtelementes 17b entsprechen der in Figur 2 abgebildeten Variante, so daß bezüglich deren Beschreibung auf das Ausführungsbeispiel gemäß Figur 2 verwiesen werden kann.

Die Figur 4 zeigt eine weitere Variante eines Dichtungselementes 17c. Dieses unterscheidet sich von den zuvor beschriebenen Dichtungselementen durch eine geänderte Anbindung am Innenring 9c. Dazu schließt sich an den radial nach innen gerichteten Schenkel 20 des Dichtelementes 17c ein rechtwinkelig abgekanteter, in Richtung der Wälzkörper 11 ausgerichteter Bord 26 an. In der Einbaulage umgreift der Bord 26 innenseitig einen axial ausgerichteten Endabschnitt 27 des Innenrings 9c. Als geeignete Maßnahme zur Befestigung des Dichtelementes 17c am Innenring 9c bietet sich eine Preßpassung an. Alternativ kann beispielsweise zur Erzielung einer formschlüssigen Verbindung der Endabschnitt 27 innenseitig profiliert sein, wobei die Profilierung korrespondiert mit einer entsprechenden Oberfläche am Bord 26 des Dichtelementes 17c. Die von der Vorlastfeder 13 über die Endwindung 21 auf den Schenkel 20 ausgeübte Axialkraft wird vom Dichtelement 17c auf die Stirnseite 28 des Innenrings 9c übertragen.

### Bezugszahlenliste

- 1: Ausrückvorrichtung
- 2: Gehäuse
- 3: Antriebswelle
- 4: Führungshülse
- 5: Ringkolben
- 6: Bohrungswandung
- 7: Druckraum
- 8: Ausrücklager
- 9a: Innenring
- 9b: Innenring
- 9c: Innenring
- 10: Außenring
- 11: Wälzkörper
- 12: Flansch
- 13: Vorlastfeder
- 14: Zwischenraum
- 15: Stirnseite
- 16: Flansch
- 17a: Dichtelement
- 17b: Dichtelement
- 17c: Dichtelement
- 18: Abschnitt
- 19: Ansatz
- 20: Schenkel
- 21: Endwindung
- 22: Bord
- 23: Ringspalt
- 24: Zone
- 25: Abschnitt
- 26: Bord
- 27: Endabschnitt
- 28: Stirnseite

## Patentansprüche

1. Ausrücklager (8) für eine Ausrückvorrichtung (1), die in Kraftfahrzeugen zwischen einer Brennkraftmaschine und einem insbesondere mechanisch schaltbaren Zahnräderwechselgetriebe angeordnet ist, zur Betätigung einer Reibungskupplung, wobei als Ausrücklager (8) ein als Schrägschulterlager ausgebildetes Wälzlager vorgesehen ist, mit einem umlaufenden und einem drehstarr angeordneten Lagerring, zwischen denen Wälzkörper (11) geführt sind und zur Erzielung eines spielfreien Einbaus das Ausrücklager (8) von einer Vorlastfeder (13) beaufschlagt ist, die sich zwischen einem Gehäuse (2) der Ausrückvorrichtung (1) und mittelbar an dem drehstarr angeordneten Lagerring abstützt und ein Dichtelement (17a, 17b, 17c) einen ringförmigen, axial ausgerichteten Zwischenraum (14), zwischen den beabstandeten Lagerringen des Ausrücklagers (8) abdeckt, wobei das an dem drehstarren Lagerring befestigte Dichtelement (17a, 17b, 17c) mit einem axial vorstehenden Abschnitt (18) den Zwischenraum (14) sowie teilweise den umlaufenden Lagerring spielbehaftet, unter Einhaltung eines Ringspaltes (23) übergreift, verbunden mit einer endseitigen radialen Überdeckung, **gekennzeichnet durch** ein Dichtelement (17a, 17b, 17c), dessen weitestgehend zylindrisch gestalteter Abschnitt (18) an dem zur Vorlastfeder (13) gerichteten Ende einen radial nach innen ausgerichteten Schenkel (20) aufweist, der sich an dem drehstarr angeordneten Innenring (9a, 9b, 9c) abstützt und dabei von der Vorlastfeder (13) kraftbeaufschlagt ist.

2. Ausrücklager nach Anspruch 1, **dadurch gekennzeichnet, daß** der Schenkel (20) des Dichtelementes (17a, 17b) an einem radial ausgerichteten Flansch (16) des Innenrings (9a, 9b) anliegt (Fig. 2, Fig. 3).

3. Ausrücklager nach Anspruch 1, **gekennzeichnet durch** ein Dichtelement (17a, 17b, 17c) das einen axial vorstehenden Ansatz (19) aufweist, der in der Einbaulage eine Endwindung (21) der Vorlastfeder (13) außen umschließt und damit die Vorlastfeder (13) außenzentriert.

4. Ausrücklager nach Anspruch 3, **dadurch gekennzeichnet, daß** ein axial ausgerichteter, sich an den Flansch (16) des Innenrings (9a) anschließender Bord (22) in der Einbaulage in den Ansatz (19) des Dichtelements (17a) eingreift (Fig. 2).

5. Ausrücklager nach Anspruch 1, **dadurch gekennzeichnet, daß** der Innenring (9c) einen axial verlaufenden Endabschnitt (27) aufweist, an dessen Stirnseite (28) der Schenkel (20) des Dichtelements (17c) abgestützt ist (Fig. 4).

6. Ausrücklager nach Anspruch 4, **dadurch gekennzeichnet, daß** der Schenkel (20) des Dichtelements (17c) zur Bildung eines Bordes (26) am freien Ende rechtwinkelig in Richtung der Wälzkörper (11) zeigend abgekantet ist und den Endabschnitt (27) des Innenrings (19) umgreift (Fig. 4).

7. Ausrücklager nach Anspruch 5, **dadurch gekennzeichnet, daß** zur Erzielung einer kraftschlüssigen Verbindung der Bord (26) des Dichtelementes (17c) auf den Endabschnitt (27) des Innenrings (9c) aufgepreßt ist.

8. Ausrücklager nach Anspruch 5, **dadurch gekennzeichnet, daß** der Bord (26) vom Schenkel (20) des Dichtelementes (17c) eine profilierte Kontaktfläche aufweist, die mit einem entsprechend profilierten Endabschnitt (27) des Innenrings (9c) formschlüssig zusammenwirkt.

9. Ausrücklager nach Anspruch 1, **dadurch gekennzeichnet, daß** der axiale Abschnitt (18) des Dichtelementes (17a, 17b, 17c) eine der Form der kugeligen Wälzkörper (11) angepaßte konvexe Außenkontur des rotierenden Außenrings (10) übergreift und ein freies Ende des Abschnitts (18) eine Hinterschneidung zum Außenring (10) sicherstellt.

10. Ausrücklager nach Anspruch 9, **gekennzeichnet durch** eine der Hinterschneidung entsprechenden Zone (24) am freien Ende des Abschnitts (18) vom Dichtelement (17a, 17b, 17c), die im Vergleich zu übrigen Bereichen des Dichtelementes (17a, 17b, 17c) eine reduzierte Wandstärke ausweist.

11. Ausrücklager nach Anspruch 10, **dadurch gekennzeichnet, daß** in einer Einbaulage die wandstärkenreduzierte Zone (24) des Dichtelementes (17a, 17b, 17c) eine schräg nach innen in Richtung der Reibungskupplung gerichtete Abkantung aufweist.

12. Ausrücklager nach Anspruch 10, **dadurch gekennzeichnet, daß** die wandstärkenreduzierte Zone (24) vor dem Einbau des Dichtelementes (17a, 17b, 17c) eine der Einbaulage entsprechende Formgebung aufweist, wobei zur Bildung einer äußeren umlaufenden V-förmigen Profilierung der Zone (24) diese am freien Ende mit einem schräg nach außen gerichteten Abschnitt (25) versehen ist.

13. Ausrücklager nach Anspruch 1, **gekennzeichnet durch** ein Dichtelement (17a, 17c), das spanlos insbesondere **durch** ein Tiefziehverfahren aus einem metallischen Bandmaterial hergestellt ist.

14. Ausrücklager nach Anspruch 1, **gekennzeichnet durch** ein Dichtelement (17b), welches aus Kunststoff hergestellt ist.

## Claims

1. Release bearing (8) for a release mechanism (1) which is mounted in motor vehicles between an internal combustion engine and an in particular mechanically shiftable toothed-wheel gear, for actuating a friction clutch, wherein a roller bearing constructed as a bevelled shoulder bearing is provided as the release bearing (8), having an encircling bearing ring and a bearing ring fixed for rotation therewith, between which roller bodies (11) are guided, and in order to install it without play the release bearing (8) is acted upon by a preloading spring (13) which rests between a housing (2) of the release mechanism (1) and indirectly on the bearing ring mounted to be fixed for rotation, and a sealing element (17a, 17b, 17c) covers an annular, axially aligned interstice (14) between the spaced-apart bearing rings of the release bearing (8), the sealing element (17a, 17b, 17c) fixed to the bearing ring which is fixed for rotation having an axially projecting portion (18) which extends over the interstice (14) and to some extent the encircling bearing ring, with some play, while maintaining an annular gap (23), combined with a radial overlap at the end, **characterised by** a sealing element (17a, 17b, 17c) the largely cylindrically shaped portion (18) of which comprises, on its end directed towards the preloading spring (13), a radially inwardly directed member (20) which rests on the inner ring (9a, 9b, 9c) mounted so as to be fixed for rotation and is thereby biased by the preloading spring (13).

2. Release bearing according to claim 1, **characterised in that** the member (20) of the sealing element (17a, 17b) abuts on a radially aligned flange (16) of the inner ring (9a, 9b) (Fig. 2, Fig. 3).

3. Release bearing according to claim 1, **characterised by** a sealing element (17a, 17b, 17c) which has an axially projecting portion (19) which in the installed position externally surrounds an end coil (21) of the preloading spring (13) and thus externally centres the preloading spring (13).

4. Release bearing according to claim 3, **characterised in that** an axially directed edge (22) adjoining the flange (16) of the inner ring (9a) engages in the portion (19) of the sealing element (17a) in the installed position (Fig. 2).

5. Release bearing according to claim 1, **characterised in that** the inner ring (9c) has an axially extending end portion (27) on the end face (28) of which the member (20) of the sealing element (17c) is supported (Fig. 4).

6. Release bearing according to claim 4, **characterised in that** at its free end the member (20) of the sealing element (17c) is bent at right angles towards the roller bodies (11) in order to form an edge (26) and engages round the end portion (27) of the inner ring (19) (Fig. 4).

7. Release bearing according to claim 5, **characterised in that** in order to obtain a frictionally locking joint the edge (26) of the sealing element (17c) is pressed onto the end portion (27) of the inner ring (9c).

8. Release bearing according to claim 5, **characterised in that** the edge (26) of the leg (20) of the sealing element (17c) has a profiled contact surface which cooperates by interlocking engagement with a correspondingly profiled end portion (27) of the inner ring (9c).

9. Release bearing according to claim 1, **characterised in that** the axial portion (18) of the sealing element (17a, 17b, 17c) extends over an outer contour of the rotating outer ring (10) which matches the shape of the spherical roller bodies (11) and a free end of the portion (18) provides an undercut to the outer ring (10).

10. Release bearing according to claim 9, **characterised by** a zone (24), corresponding to the undercut, at the free end of the portion (18) of the sealing element (17a, 17b, 17c), which has a reduced wall thickness compared with other parts of the sealing element (17a, 17b, 17c).

11. Release bearing according to claim 10, **characterised in that** in an installed position the zone (24) of the sealing element (17a, 17b, 17c) with reduced wall thickness has a bend which is directed diagonally inwards in the direction of the friction clutch.

12. Release bearing according to claim 10, **characterised in that** before the installation of the sealing element (17a, 17b, 17c) the zone (24) with reduced wall thickness has a shape corresponding to the position of installation, while in order to form an outer encircling V-shaped profiling of the zone (24) the latter is provided at its free end with a portion (25) directed diagonally outwards.

13. Release bearing according to claim 1, **characterised by** a sealing element (17a, 17c) which is produced by a non-cutting process, particularly by deep-drawing, from a metallic strip material.

14. Release bearing according to claim 1, **characterised by** a sealing element (17b) made of plastics.

## Revendications

1. Butée de débrayage (8) pour un dispositif de débrayage (1) disposé, dans des véhicules automobiles, entre un moteur à combustion interne et une boîte de vitesses à engrenages, en particulier à changement de rapport mécanique, destinée à l'actionnement d'un embrayage à friction, dans lequel il est prévu, comme butée de débrayage (8), un roulement constitué par un roulement à épaulements obliques, qui comprend une bague de roulement tournante et une bague de roulement fixe en rotation, entre lesquelles sont guidés des corps roulants (11) et, pour obtenir un montage sans jeu, la butée de débrayage (8) est sollicitée par un ressort de précontrainte (13) qui prend appui entre un boîtier (2) du dispositif de débrayage (1) et directement contre la bague de roulement disposée fixe en rotation, et un élément de joint (17a, 17b, 17c) recouvre un espace intermédiaire annulaire (14) orienté axialement, entre les bagues de roulement espacées de la butée de débrayage (8), l'élément de joint (17a, 17b, 17c) fixé à la bague de roulement fixe en rotation, recouvrant par un segment (18) qui fait saillie axialement la chambre intermédiaire (14) ainsi qu'en partie la bague de roulement tournante, avec jeu, en ménageant une fente annulaire (23), combinée à un recouvrement radial terminal,
**caractérisée par**
un élément de joint (17a, 17b, 17c) dont le segment (18) qui est de forme principalement cylindrique, présente à l'extrémité dirigée vers le ressort de précontrainte (13), une branche (20) orientée radialement vers l'intérieur et qui prend appui contre la bague intérieure (9a, 9b, 9c) fixe en rotation, et qui est alors sollicitée par action de force par le ressort de précontrainte (13).

2. Butée de débrayage selon la revendication 1,
**caractérisée en ce que**
la branche (20) de l'élément de joint (17a, 17b) est appuyée (figures 2, 3) contre une collerette (16) orientée radialement de la bague intérieure (9a, 9b).

3. Butée de débrayage selon la revendication 1,
**caractérisée par**
un élément de joint (17a, 17b, 17c) qui présente une protubérance (19) faisant saillie axialement, qui entoure extérieurement une spire terminale (21) du ressort de précontrainte (13) dans la position de montage et qui, ainsi, centre le ressort de précontrainte (13) par l'extérieur.

4. Butée de débrayage selon la revendication 3,
**caractérisée en ce qu'**
un collet (22) orienté axialement, qui fait suite à la collerette (16) de la bague intérieure (9a) est engagé dans la protubérance (19) de l'élément de joint (17a) dans la position de montage (figure 2).

5. Butée de débrayage selon la revendication 1,
**caractérisée en ce que**
la bague intérieure (9c) présente un segment terminal (27) s'étendant axialement contre le côté frontal (28) duquel la branche (20) de l'élément de joint (17c) est appuyée (figure 4).

6. Butée de débrayage selon la revendication 4,
**caractérisée en ce que**
la branche (20) de l'élément de joint (17c) est rabattue à angle droit à l'extrémité libre en pointant à angle droit en direction des corps roulants (11), pour former un collet (26) et recouvre le segment terminal (27) de la bague intérieure (19) (figure 4).

7. Butée de débrayage selon la revendication 5,
**caractérisée en ce que**
pour obtenir une liaison par action de force, le collet (26) de l'élément de joint (17c) est emboîté à force sur le segment terminal (27) de la bague intérieure (9c).

8. Butée de débrayage selon la revendication 5,
**caractérisée en ce que**
le collet (26) de la branche (20) de l' élément de joint (17c) présente une surface de contact profilée qui coopère par sûreté de forme avec un segment terminal (27) de profil correspondant de la bague intérieure (9c).

9. Butée de débrayage selon la revendication 1,
**caractérisée en ce que**
le segment axial (18) de l'élément de joint (17a, 17b, 17c) recouvre un contour extérieur convexe de la bague extérieure tournante (10) qui est adaptée à la forme des corps roulants sphériques (11), et une extrémité libre du segment (18) établit une contre-dépouille dirigée vers la bague extérieure (10).

10. Butée de débrayage selon la revendication 9,
**caractérisée par**
une zone (24) correspondant à la contre-dépouille, à l'extrémité libre du segment (18) de l'élément de joint (17a, 17b, 17c) qui présente une épaisseur de paroi réduite comparativement aux régions restantes de l'élément de joint (17a, 17b, 17c).

11. Butée de débrayage selon la revendication 10,
**caractérisée en ce que**
dans une position de montage, la zone (24) d'épaisseur de paroi réduite de l'élément de joint (17a, 17b, 17c) présente une partie rabattue dirigée obliquement vers l'intêrieur en direction de l'embrayage à friction.

12. Butée de débrayage selon la revendication 10,
**caractérisée en ce que**
avant le montage de l'élément de joint (17a, 17b, 17c), la zone (24) d'épaisseur réduite présente une conformation qui correspond à la position de montage et, pour la formation d'un profil extérieur périphérique en forme de V de la zone (24), cette zone est munie à l'extrémité libre d'un segment (25) dirigé obliquement vers l'extérieur.

13. Butée de débrayage selon la revendication 1,
**caractérisée par**
un élément de joint (17a, 17c) fabriqué sans enlèvement de copeaux, en particulier par un procédé d'emboutissage, à partir d'une matière métallique en bande.

14. Butée de débrayage selon la revendication 1,
**caractérisée par**
un élément de joint (17b) fabriqué en matière plastique
